# EUROPÄISCHE PATENTSCHRIFT

(11) **EP 1 070 090 B1**
(45) Veröffentlichungstag und Bekanntmachung des Hinweises auf die Patenterteilung: **23.01.2002**
(21) Anmeldenummer: 99910271.8
(22) Anmeldetag: 24.02.1999
(51) Int. Cl.: C08G 18/32, C08G 18/28, C08G 18/70

(54) **WASSERDISPERGIERBARE POLYISOCYANATZUBEREITUNGEN ZUR HERSTELLUNG VON WIEDERAUFSCHLIESSBAREM PAPIER**
WATER-DISPERSIBLE POLYISOCYANATE PREPARATIONS FOR PRODUCING REPULPABLE PAPER
PREPARATIONS DE POLYISOCYANATES DISPERSABLES DANS L'EAU ET DESTINEES A LA PREPARATION DE PAPIER RETRITURABLE

(30) Priorität: 06.03.1998 DE 19809669
(43) Veröffentlichungstag der Anmeldung: 24.01.2001
(73) Patentinhaber: Bayer Aktiengesellschaft, 51368 Leverkusen (DE)
(72) Erfinder: JANSEN, Bernhard, D-51061 Köln (DE); THIELE, Bernd, D-51519 Odenthal (DE); ROICK, Thomas, D-51375 Leverkusen (DE)
(86) Internationale Anmeldenummer: EP9901189
(87) Internationale Veröffentlichungsnummer: WO9945051

(56) Entgegenhaltungen:
- EP-A- 0 013 112
- EP-A- 0 582 166

## Beschreibung

Die vorliegende Erfindung betrifft wasserdispergierbare Polyisocyanate, ihre Herstellung und ihre Verwendung zur Herstellung von wiederaufschließbaren cellulosehaltigen Materialien.

Aus dem Stand der Technik sind bereits eine Vielzahl von Papierhilfsmitteln auf Basis von Polyisocyanaten bekannt. So z.B. aus EP-A 0 582 166, wo neben der Leimung auch die Naßfest- bzw. Trockenfestausrüstung von Papier mittels Polyisocyanaten, welche tert. Amino- und/oder Ammoniumgruppen aufweisen und 0 bis 30 Gew.-% (bezogen auf das Gemisch) an Ethylenoxidgruppen in Form von Polyetherketten besitzen, beschrieben ist.

Allen unter Verwendung von Polyisocyanaten in der Masse hergestellten oder in der Oberfläche ausgerüsteten Papieren ist jedoch gemeinsam, daß sie je nach Aufwandsmenge schwer oder überhaupt nicht wieder aufgeschlossen werden können. Es ist ja Sinn der Naßfestausrüstung des Papiers, mechanische Festigkeit bei Wasserdurchfeuchtung zu gewährleisten; eine Wiederaufschließbarkeit, beispielsweise in Wasser oder verdünnten, wäßrigen alkalischen Lösungen, ist daher im allgemeinen nicht möglich. Andererseits ist die Rückführung von Produktionsausschuß der Papier-, Karton- und Pappeproduktion (z.B. Randbeschnitt, sonstiger Verschnitt und Fehlchargen) sinnvoll und notwendig. Es besteht daher Bedarf an wasserdispergierbaren Polyisocyanaten, welche Naßfestigkeit sowie Trockenfestigkeit gewährleisten, die aber gleichzeitig dem celluloschaltigen Material Wiederaufschließbarkeit unter den Bedingungen der Papierfabrikation verleihen.

Aus WO 96/20309 sind bereits wiederaufschließbare cellulosehaltige Materialien bekannt, die unter Verwendung von Estergruppen-haltigen Polyisocyanaten hergestellt werden können.

Die nicht vorveröffentlichte deutsche Patentanmeldung Nr. 196 40 205.0 beschreibt wasserdispergierbare Polyisocyanate, die unter Verwendung von quaternierten tert. Aminopolyalkylenoxidpolyetheralkoholen hergestellt werden, die als Papierhilfsmittel mit verbessertem Aufziehvermögen eingesetzt werden und ebenfalls Wiederaufschließbarkeit versprechen.

Die gestiegenen Anforderungen des Papierhilfsmittelmarktes umfassen aber nicht nur eine sehr gute Naßfestigkeit verbunden mit einer guten Wiederaufschließbarkeit des naßfest ausgerüsteten Papiers, sondern auch eine gute Wasseraufnahme, d.h. eine gute Saugfähigkeit des Papiers, die für viele Anwendungen von Bedeutung ist. In dieser Hinsicht sind die aus dem Stand der Technik bekannten Papierhilfsmittel noch verbesserungsbedürftig.

Gegenstand der vorliegenden Erfindung sind wasserdispergierbare Polyisocyanate, erhältlich durch Umsetzung von:
a) mindestens einer bishydroxylfunktionellen Verbindung der Struktur (I):

   HO-R₁-[O-CR₂R₃-O-R₁]ₙ-OH (I),

   worin
   - R₁: für einen Alkylenrest mit zwei bis zehn Kohlenstoffatomen oder für einen Rest -R-[O-R]ₚ- steht, wobei R für einen Alkylenrest mit zwei bis zehn Kohlenstoffatomen und p für eine ganze Zahl von 0 bis 12 steht,
   - R₂ und R₃: unabhängig voneinander für C₁- bis C₁₀-Alkyl oder Wasserstoff stehen, mit der Maßgabe, daß sofern einer der Reste R₂ oder R₃ für Wasserstoff steht, der andere Rest für C₁- bis C₁₀-Alkyl steht, und
   - n: für eine ganze Zahl von 1 bis 45, bevorzugt von 1 bis 30, steht,
   mit
b) wenigstens einem Polyisocyanat der Struktur (II)

   Q[NCO]_{q} (II),

   worin
   - q: für eine Zahl größer oder gleich 2 steht, und
   - Q: für einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 12, C-Atomen steht, wobei die genannten aliphatischen, cycloaliphatischen, aromatischen und araliphatischen Kohlenwasserstoffreste jeweils gegebenenfalls ein oder mehrere, vorzugsweise 1 bis 4 Heteroatome aus der Reihe O, N, S enthalten,
   und anschließender Umsetzung in beliebiger Reihenfolge mit
c) mindestens einem monofunktionellen Polyetheralkohol der Struktur (III)

   R₄-[O-R₅]ₘ-O-H (III),

   worin
   - R4: für C₁-C₄-Alkyl steht,
   - R₅: für -CHX-CHY- steht, wobei X und Y für Methyl, Ethyl oder Wasserstoff stehen mit der Maßgabe, daß sofern einer der Substituenten X und Y Methyl oder Ethyl bedeutet, der andere stets Wasserstoff bedeutet,
   - m: für eine ganze Zahl zwischen 3 und 50, bevorzugt zwischen 3 und 25 steht,
   sowie gegebenenfalls
d) mit einer Verbindung der Struktur (IV)

   H-O-[R₅-O]ₒ-N⁺R₆R₇R₈ X⁻ (IV),

   worin
   - R5: die oben für Formel (III) angegebene Bedeutung hat,
   - R⁶ und R⁷: unabhängig voneinander für C₂-C₇-Alkyl stehen,
   oder
   - R⁶ und R⁷: gemeinsam mit dem N-Atom, an welches sie gebunden sind, für einen 5- oder 6-gliedrigen heterocyclischen Ring, vorzugsweise für Morpholin stehen,
   - R⁸: für C₁-C₇-Alkyl steht,
   - o: für eine ganze Zahl von 2 bis 60, bevorzugt von 2 bis 30, steht, und
   - X⁻: für ein Anion, insbesondere für Halogenid, Tosyl, Trifluormethylsulfat, Methylsulfat, Sulfat, steht.

Gegenstand der vorliegenden Erfindung ist weiterhin ein Verfahren zur Herstellung von wasserdispergierbaren Polyisocyanaten durch Umsetzung von
a) mindestens einer bishydroxylfunktionellen Verbindung der oben angegebenen Struktur (I) mit
b) mindestens einem Polyisocyanat der oben angegebenen Struktur (II)
   und anschließender Umsetzung in beliebiger Reihenfolge mit
c) mindestens einem Polyetheralkohol der oben angegebenen Struktur (III)
   und gegebenenfalls mit
d) mindestens einem quaternierten tertiären Aminopolyetheralkohol der oben angegebenen Struktur (IV).

Bei dem erfindungsgemäßen Verfahren können gegebenenfalls weitere Hilfs- und Zusatzstoffe wie z.B. in der Polyurethanchemie an sich bekannte Katalysatoren oder Stabilisatoren für wasserdispergierbare Polyisocyanatzubereitungen sowie viskositätsermäßigende Additive wie nicht isocyanatreaktive Lösungsmittel mitverwendet werden. Beispielhaft für diese "Verdünnungsmittel" seien genannt Propylenglykoldiacetat, Methoxypropylacetat.

Die bishydroxylfunktionellen Verbindungen der Struktur (I) sind erhältlich aus den Dialkylketalen von Ketonen oder Dialkylacetalen von Aldehyden. Unter allen Dialkylketalen bzw. -acetalen sind diese bevorzugt, welche auf aliphatischen Ketonen bzw. Aldehyden basieren wie beispielsweise Aceton, Methylethylketon, Methylpropylketon, Diethylketon, Methylisopropylketon, Methylisobutylketon, Methyltertiärbutylketon, Dipropylketon, Dinonylketon, 2-Undecanon und aus diesen durch Umsetzung mit Monoalkoholen wie beispielsweise Methanol, Ethanol, Propanol, Iropropanol, Butanolen, Pentanolen oder auch höhermolekularen Monoalkoholen wie den Fettalkoholen, wie beispielsweise Stearylalkohol, erhältlich sind.

Beispielhaft für aliphatische Aldehyde seien genannt: Formaldehyd, Acetaldehyd, Propionaldehyd, n-Butyraldehyd, iso-Butyraldehyd, Pivalinaldehyd, Önanthaldehyd, 2-Ethylhexanal sowie höhere Aldehyde. Die Dialkylacetale sind aus den Aldehyden durch Umsetzung mit den obengenannten Monoalkoholen erhältlich.

Diese Dialkylketale bzw. -acetale werden mittels saurer Katalysatoren wie beispielsweise p-Toluolsulfonsäure, Trifluormethylsulfonsäure, sauer beladener Ionenaustauscher oder alkalischer Katalysatoren wie beispielsweise Natriummethylat, Natriumethylat, Natriumisopropylat mit bekannten Diolen wie Ethylenglykol, Propylenglykol, Diethylenglykol, Dipropylenglykol, Triethylenglykol, Tripropylenglykol, oligomere Polyethylen- oder Polypropylenglykole bis zu einem Molekulargewicht bis 350, Propandiol-1,3, Butandiol-1,4, Pentandiol-1,5, Neopentylglykol, Hexandiol-1,6, 3-Methylpentandiol-1,5, Hexandiol-2,5 umgesetzt. Für diese Reaktion geeignet sind ebenfalls Polyetherpolyole an sich bekannter Art mit einer Funktionalität von 2, welche gestartet sind auf Diolen oder Diphenolen und deren Etherketten aus Ethylen-, Propylen- und/oder Butylenoxideinheiten bestehen.

Die Herstellung der bishydroxylfunktionellen Verbindungen der Struktur (I) erfolgt durch Umketalisierung bzw. Umacetalisierung der Dialkylketale bzw. -acetale aliphatische Ketone oder Aldehyde mit Diolen unter gleichzeitigem Abdestillieren des sich bildenden Alkoholes. Bei Verwendung geeigneter Lösungsmittel kann der Alkohol auch als Azeotrop mit dem Lösungsmittel abdestilliert werden. Als Katalysatoren für diese Reaktion kommen saure und basische Substanzen in Frage wie beispielsweise p-Toluolsulfonsäure oder Natriummethylat aber auch mit Wasserstoffionen beladene Ionenaustauscher. Bei dieser Reaktion entstehen oligomere Strukturen mit terminalen Hydroxylfunktionen. Eine Variante des Verfahrens besteht darin, die Diole im Überschuß einzusetzen und nach erfolgter Umketalisierung bzw. -acetalisierung das überschüssige Diol unter schonenden Bedingungen, gegebenenfalls durch Dünnschichtdestillation, wieder zu entfernen. Die dergestalt hergestellten Oligoketale bzw. -acetale können unmittelbar in die Reaktion mit Isocyanaten eingesetzt werden.

Bevorzugte bishydroxylfunktionelle Verbindungen (I) sind oligomere Umsetzungsprodukte aus Acetondialkylketalen mit oligomeren Polyethylenglykolen.

Als Polyisocyanate der Struktur (II) sind verwendbar: aliphatische, cycloaliphatische, araliphatische oder aromatische Isocyanate der NCO-Funktionalität von 1,8 bis 4,2. Bevorzugt werden Polyisocyanate verwendet, welche Isocyanurat- und/oder Allophanat- und/oder Biuret- und/oder Oxadiazinstrukturen aufweisen, und in an sich bekannter Art und Weise durch entsprechende "Modifizierung" aus aliphatischen, cycloaliphatischen, araliphatischen oder aromatischen Diisocyanaten zugänglich sind. Derartige Polyisocyanate (II) sind z.B. in der DE-A 28 32 253, Seite 10 bis 11 beschrieben.

Bevorzugt sind im wesentlichen Modifizierungsprodukte des Hexamethylendiisocyanates und des 1-Isocyanato-3,3,5-trimethyl-5-isocyanatomethyl-cyclohexans im Gemisch mit deren bei der Modifizierung anfallenden höhermolekularen Homologen mit einem Isocyanatgehalt von 17 bis 25 Gew.-%. Besonders bevorzugt sind die durch die an sich bekannte Trimerisierungsreaktion erhältlichen entsprechenden, weitgehend uretdionfreien Isocyanurate mit einer mittleren NCO-Funktionalität von 3,2 bis 4,2, und die durch Mitverwendung von Kohlendioxid herstellbaren entsprechenden Oxadiazintrione mit einer mittleren NCO-Funktionalität von 1,8 bis 3,5 sowie die durch entsprechende Verfahren zugänglichen im wesentlichen Biuretstrukturen aufweisende trimere Polyisocyanate.

Polyetheralkohole der Struktur (III) sind einwertige, im statistischen Mittel 2 bis 70, vorzugsweise 2 bis 60, insbesondere 3 bis 50 Polyalkylenoxideinheiten pro Molekül aufweisende Polyalkylenoxidpolyetheralkohole, wie sie in an sich bekannter Art und Weise durch Alkoxylierung geeigneter Startermoleküle zugänglich sind.

Zur Herstellung dieser Polyalkylenoxidpolyetheralkohole können beliebige einwertige Alkohole des Molekulargewichtsbereiches 32 bis 150 g/mol als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol oder Ethylenglykolmonomethylether. Für die Alkoxylierungsreaktion geeignete Alkylenoxide sind insbesondere Ethylenoxid, Propylenoxid und Butylenoxid, die in beliebiger Reihenfolge oder auch im Gemisch bei der Alkoxylierungsreaktion eingesetzt werden können.

Bevorzugte Polyetheralkohole (III) sind Methoxypolyethylenglykole des Molekulargewichtsbereiches 150 bis 1000.

Weniger bevorzugt sind durch die Struktur (III) nicht beschriebene estergruppenhaltige Polyalkylenoxidpolyesterether, die durch Umsetzung von aliphatischen Dicarbonsäuren mit 2 bis 8 Kohlenstoffatomen oder deren Estern oder Säurechloriden mit Polyethern aus der Gruppe der Polyethylenglykole, Polypropylenglykole oder deren Mischpolyetherformen oder auch einfachen Gemischen von beiden zugänglich sind und ein mittleres Molgewicht unter 10000 g/mol, vorzugsweise unter 3000 g/mol, aufweisen und durch Hydroxylfunktionen terminiert sind.

Quatemierte Aminopolyalkylenoxidpolyetheralkohole der Struktur (IV) sind an sich aus EP-A 109 354 und EP-A 335 115 bekannt. Die Verbindungen (IV) werden vorzugsweise so dargestellt, daß mindestens eine tert. Aminogruppe aufweisende Alkohole des Molekulargewichtsbereiches von bis zu 150 g/mol als Startermoleküle eingesetzt werden. Bevorzugt werden als Startermoleküle mindestens eine tert. Aminofunktion aufweisende aliphatische Alkohole mit bis zu 15 Kohlenstoffatomen verwendet. Besonders bevorzugt als Startermoleküle werden monofunktionelle tert. Aminoalkohole mit bis zu 10 Kohlenstoffatomen verwendet. Die Quaternierung der tert. Aminofunktion kann sowohl vor der Alkoxylierung als auch danach erfolgen.

Die Alkoxylierung erfolgt nach an sich bekannten Verfahren des Standes der Technik mit bekannten Alkylierungsmitteln. Beispielhaft seien hier genannt: Dialkylsulfate, Alkylchloride, Alkylbromide, Alkyliodide, Toluolsulfonsäurealkylester, Alkylphosphonsäureester sowie Trifluorrnethylsulfonsäurealkylester. Bevorzugt sind Alkylierungsmittel mit einem Alkylrest von einem bis sieben Kohlenstoffatomen. Besonders bevorzugt sind Methylverbindungen, insbesondere Methylchlorid, Dimethylsulfat, Toluolsulfonsäuremethylester und Trifluormethylsulfonsäuremethylester.

Für die Alkoxylierungsreaktion geeignete Alkylenoxide sind insbesondere Ethylenoxid, Propylenoxid und/oder Butylenoxid, die in beliebiger Reihenfolge oder auch im Gemisch bei der Alkoxylierungsreaktion eingesetzt werden können.

Bei den obengenannten, auf tert. Aminogruppen oder deren quaternierte Form aufweisenden Alkoholen gestarteten Polyalkylenoxidpolyetheralkoholen handelt es sich vorzugsweise um reine Polyethylenoxidpolyether oder um gemischte Polyalkylenoxidpolyether, die mindestens eine Polyethersequenz aufweisen, die mindestens 2, im allgemeinen 2 bis 70, vorzugsweise 2 bis 60, besonders bevorzugt 2 bis 50, Ethylenoxideinheiten besitzt, und deren Alkylenoxideinheiten zu mindestens 60 Mol-%, vorzugsweise zu mindestens 70 Mol-%, aus Ethylenoxideinheiten bestehen.

Bevorzugte derartige Polyethylenoxidpolyetheralkohole sind monofunktionelle, auf einem aliphatischen, tert. Aminofunktionen oder deren alkylierte Form aufweisenden, bis zu 10 Kohlenstoffatome aufweisenden Alkohol gestarteten Polyalkylenoxidpolyether, die im statistischen Mittel 2 bis 60 Ethylenoxideinheiten enthalten.

Diese Polyether können auch Estergruppen enthalten; sie sind dann aber weniger bevorzugt.

Die erfindungsgemäßen Polyisocyanat-Zubereitungen können entweder separat oder im Gemisch auch in Kombination mit externen ionischen oder nichtionischen Emulgatoren eingesetzt werden. Solche Emulgatoren sind beispielsweise in Houben-Weyl, "Methoden der organischen Chemie", Thieme-Verlag, Stuttgart (1961), Bd. XIV/1, Teil 1, Seite 190 bis 208, in US-PS 3 428 592 und im EP-A 0 013 112 beschrieben. Die Emulgatoren werden in einer die Dispergierbarkeit gewährleistenden Menge eingesetzt.

Die Ausgangskomponenten werden in beliebiger Reihenfolge unter Ausschluß von Feuchtigkeit vorzugsweise ohne Lösungsmittel umgesetzt (Eintopfreaktion). Es ist auch möglich, zuerst die Vorreaktion der Komponenten a) und b) vorzunehmen und dann das gemeinsame Reaktionsprodukt mit den Komponenten c) und d) umzusetzen. Mit steigender Menge an Alkohol-Komponente e) steigt auch die Viskosität des Endproduktes, so daß in bestimmten Fällen (wenn die Viskosität z.B. über 100 Pas ansteigt) ein Lösungsmittel zugesetzt werden kann, das vorzugsweise mit Wasser mischbar ist, aber gegenüber dem Polyisocyanat inert ist. Geeignete Lösungsmittel sind:

Alkylether-acetate, Glykoldiether, Toluol, Carbonsäureester, Aceton, Methylethylketon, Tetrahydrofuran, Dimethylformamid, Methoxypropylacetat oder deren Gemische.

Durch an sich bekannte Katalysatoren wie Dibutylzinndilaurat, Zinn-(II)-octoat oder 1,4-Diazabicyclo[2,2,2,]octan in Mengen von 10 bis 1.000 ppm, bezogen auf die Reaktionskomponenten kann die Reaktion beschleunigt werden. Die Reaktion wird bei Temperaturen bis 130°C, vorzugsweise bei 10°C bis 100°C, besonders bevorzugt bei 20°C bis 80°C, durchgeführt. Die Reaktion kann durch Titration des NCO-Gehaltes oder durch Auswertung der NCO-Bande des IR-Spektrums bei 2260 bis 2275 cm⁻¹ verfolgt werden und ist beendet, wenn der Isocyanatgehalt nicht mehr als 0,1 Gew.-% oberhalb des Wertes liegt, der dem vollständigen Umsatz entspricht. In der Regel sind Reaktionszeiten von weniger als 24 Stunden ausreichend. Bevorzugt ist eine lösungsmittelfreie Synthese.

Die Komponenten a) bis d) werden vorzugsweise in folgenden Mengen eingesetzt:

| | |
|---|---|
| Komponente a:) | 10 bis 50 Gew.-Teile |
| Komponente b): | 50 bis 90 Gew.-Teile |
| Komponente c): | 12 bis 45 Gew.-Teile |
| Komponente d): | 0 bis 25 Gew.-Teile |
| Reaktionsprodukt aus a) und b): 50 bis 80 Gew.-Teile dabei ist stets die Summe aller Gewichtsteile 100. | |

Die erfindungsgemäßen Polyisocyanate sind wasserdispergierbar. Das bedeutet, es handelt sich um Polyisocyanate, die in einer Konzentration von bis zu 70 Gew.-%, vorzugsweise 0,05 bis 70 Gew.-%, insbesondere 0,05 bis 10 Gew.-% in Wasser feinteilige Dispersionen mit Partikelgrößen von unter 500 nm, insbesondere von 80 bis 500, vorzugsweise 100 bis 350 nm ergeben. Diese wäßrigen Dispersionen der erfindungsgemäßen Polyisocyanate sind ebenfalls Gegenstand der vorliegenden Erfindung. Die erfindungsgemäßen wäßrigen Dispersionen können weitere, übliche Hilfs- und Zusatzstoffe, wie z.B. Lösungsmittel, Stabilisatoren, enthalten.

Die erfindungsgemäßen Polyisocyanate sind technisch gut handhabbar und über Monate unter Ausschluß von Feuchtigkeit lagerstabil. Zur Dispergierung eignen sich die in der Technik üblichen Mischaggregate (Rührer, Mischer mit Rotor-Stator-Prinzip und z.B. Hochdruckemulgicrmaschinen).

Die bevorzugten erfindungsgemäßen Polyisocyanate sind selbstemulgierend, d.h. sie lassen sich nach Zugabe zur Wasserphase auch ohne Einwirkung hoher Scherkräfte leicht emulgieren. In der Regel reicht ein statischer Mischer aus. Die erhaltenen erfindungsgemäßen Dispersionen besitzen eine bestimmte Verarbeitungszeit, die von der Struktur der erfindungsgemäß einzusetzenden Polyisocyanate, insbesondere von deren Gehalt an basischen N-Atomen abhängt. Die Verarbeitungszeit einer solchen wäßrigen Emulsion beträgt in der Regel bis zu 24 Stunden. Die Verarbeitungszeit ist als die Zeit definiert, in der das Optimum der Trocken- und Naßfestwirkung erreicht wird.

Zur Erleichterung der Einarbeitung in die wäßrige Phase kann es zweckmäßig sein, das wasserdispergierbare Polyisocyanat in einem gegenüber Isocyanatgruppen inerten Lösungsmittel gelöst einzusetzen. Geeignete Lösungsmittel sind beispielsweise die obengenannten. Der Anteil der Lösungsmittel in der Lösung des Polyisocyanats sollte höchstens 80 Gew.-%, vorzugsweise höchstens 50 Gew.-%, betragen. Besonders bevorzugt ist jedoch die erfindungsgemäße Verwendung lösungsmittelfreier, wasserdispergierbarer Polyisocyanaten.

Ein weiterer Gegenstand der vorliegenden Erfindung ist die Verwendung der erfindungsgemäßen wäßrigen Polyisocyanat-Dispersionen zur Veredlung von cellulosehaltigen Materialien.

Als cellulosehaltige Materialien kommen insbesondere Papier, Pappe oder Karton in Frage, die jeweils gegebenenfalls auch Anteile an Holzfasern (Holzschliff), enthalten können.

Unter Veredlung ist die Trocken- und Naßfestausrüstung der genannten Materialien zu verstehen.

Zur Trocken- und Naßfestausrüstung können die wäßrigen Polyisocyanat-Dispersionen in der Masse eingesetzt werden, sie werden dann vorzugsweise der cellulosehaltigen Dispersion der Faserrohstoffe direkt zugesetzt. Dazu dispergiert man das erfindungsgemäße Polyisocyanat bei 20 bis 80°C in Wasser und gibt die dabei erhaltene Dispersion zu einer Suspension des Faserrohstoffs oder dispergiert sie direkt in der Suspension der Faserstoffe. Aus dieser Suspension bildet sich durch Entwässerung das Papier, das anschließend getrocknet wird. Zur Dispergierung des Polyisocyanates ist es zweckmäßig, die 1- bis 4-fache Menge an Wasser vorzugeben. Auch höhere Wassermengen sind möglich. Zur Behandlung der Oberfläche wird ein fertiges Rohpapier mit einer erfindungsgemäßen wäßrigen Polyisocyanat-Dispersion behandelt und anschließend getrocknet. Der Einsatz in der Leimpresse ist möglich. Dabei wird das in Wasser dispergierte Polyisocyanat auf die fertige Papierbahn übertragen.

Um die optimale Naßfestigkeit unter Praxisbedingungen zu erzielen, ist eine Dosierung kurz vor dem Stoffauflauf der Papiermaschine besonders empfehlenswert. Zur Prüfung wird man im allgemeinen im Labor Papierblätter mit einem Flächengewicht von 50 bis 100 g/m² bilden.

Erfindungsgemäß können die Produkte im pH-Bereich von 4 bis 10, vorzugsweise von 5,5 bis 9 in der Masse zum Feststoff dosiert werden. Besonders bevorzugt ist die Anwendung im neutralen pH-Bereich (pH 6 bis 7,5). Die vom pH-Wert unabhängigen kationischen Ladung führt dazu, daß das Aufziehverhalten auch im alkalischen verbessert wird, ganz im Gegensatz zu den nur tert. Aminogruppen aufweisenden wasserdispergierbaren Polyisocyanaten.

Die Einsatzmengen an erfindungsgemäßer wäßriger Polyisocyanat-Dispersion richten sich nach dem angestrebten Effekt. In der Regel sind Einsatzmengen von 0,001 bis 50 Gew.-%, vorzugsweise 0,1 bis 10 Gew.-%, besonders bevorzugt 0,1 bis 2,0 Gew.-%, Wirkstoff, bezogen auf trockenen Faserrohstoff, ausreichend. Die Dosierung an Wirksubstanz, bezogen auf Faserrohstoff, entspricht der von bekannten Naßfestmitteln des Polyamidamin-Epichlorhydrin-Typs.

Die erfindungsgemäß einzusetzenden wäßrigen Polyisocyanat-Dispersionen ergeben gebrauchsfertige Papiere mit guter Naßfestigkeit ab Maschine. Durch Lagerung des fertigen Papiers und/oder eine Nachkondensation kann eine Verstärkung der Naßfestwirkung erreicht werden. Auch die Trockenfestigkeit ist gegenüber konventionellen Trockenfestmitteln verbessert. Darüber hinaus zeichnen sich die erhaltenen Papiere durch eine verbesserte Saugfähigkeit aus.

Die erfindungsgemäße Verwendung der erfindungsgemäßen wäßrigen Polyisocyanat-Dispersionen zur Veredelung wird bei den in der Papierindustrie üblichen Arbeitstemperaturen durchgeführt. Die Verarbeitungsdauer ist dabei von der Temperatur abhängig. Im Temperaturbereich von 20 bis 25°C ist die Verarbeitungsdauer relativ lang. Die Naßfestwirkung erreicht nach 6-stündiger Lagerung der wäßrigen Dispersionen noch ca. 70 % des Wertes bei sofortiger Anwendung der Dispersion. Bei höherer Temperatur, z.B. bei 50°C, ist eine Verarbeitung innerhalb von 6 Stunden zu empfehlen. Die maximale Naßfestwirkung ist dagegen überraschenderweise kaum von der Kontaktzeit mit der Cellulose abhängig. Papiere, die sofort und nach einer Kontaktzeit von 2 Stunden nach Zusatz der zum Papierfaserstoff gebildet wurden, zeigen jeweils die gleiche Naßfestigkeit. Durch geeignete Wahl der Ausgangskomponenten kann die Festigkeit des Papiers in der gewünschten Weise eingestellt werden.

Die erfindungsgemäßen wäßrigen Polyisocyanat-Dispersionen sind in Kombination mit anderen kationischen Hilfsmitteln, wie Retentionsmitteln, Fixierhilfsmittel, Trockenhilfsmittel und Naßfestmitteln, einsetzbar. Insbesondere durch Zusatz von handelsüblichen Retentionsmitteln vom Typ der kationischen Polykondensate und Polymerisate, z.B. der Polyamide, der Polyethylenimine, der Polyamidamine und der Polyacrylamide sowie der Dual-Systeme, bestehend aus kationischen oder kationischen und anionischen und gegebenenfalls partikulären Komponenten wie Kieselsolen etc. kann die Fixierung von Füllstoffen noch verstärkt werden.

Dies ist besonders dann von Interesse, wenn eine Anwendung im Laminatpapier-Bereich gedacht ist. Bevorzugte Retentionsmittel im Sinne der Erfindung sind kationische Polykondensate aus Polyaminen, vorzugsweise mit Dichlorethan. Es sei jedoch hervorgehoben, daß der gewünschte Naßfesteffekt auch ohne Zusatz besonderer Fixierhilfsmitteln zu erzielen ist. Die Festigkeit des Papiers kann insbesondere durch Kombination mit Polysacchariden wie Hydroxyethylcellulose, Carboxymethylcellulose, Stärke, Galactomannanen oder deren kationischen Derivaten erhöht werden.

Selbstverständlich können die erfindungsgemäß zu verwendenden Polyisocyanat-Dispersionen gegebenenfalls mit den obengenannten kationischen Hilfsmitteln gemeinsam, d.h. gleichzeitig oder nacheinander, eingesetzt werden. Da viele der Hilfsmittel jedoch organisch gebundenes Halogen enthalten, ist eine Kombination mit AOX-freien und/oder AOX-armen Hilfsmitteln besonders bevorzugt, da die chlorfreie Papierherstellung vorrangiges Ziel ist.

Alle unter Verwendung der erfindungsgemäßen wäßrigen Polyisocyanat-Dispersionen hergestellten cellulosehaltigen Materialien wie Papier, Pappe oder Karton sind wiederaufschließbar.

Dieses Wiederaufschließen mit dem Ziel der Wiederverwendung der Faserrohstoffe ist auf verschiedene Weise möglich:
a) Durch Behandlung mit Alkalien oder Säuren, bevorzugt mit Alkalien bei leicht erhöhter Temperatur, 35 bis 120°C, bevorzugt 40 bis 110°C, gegebenenfalls unter Mitverwendung von Oxidationsmitteln wie H₂O₂ oder K₂S₂O₈.
b) Durch Behandlung mit Ozon.
c) Durch Behandlung mit estergruppenspaltenden Enzymen.
d) Durch Behandlung mit estergruppenspaltenden Mikroorganismen.

Diese an sich bekannten Methoden führen bei einem naßfesten cellulosehaltigen Material zum Verlust der Naßfestigkeit und zur Möglichkeit, durch Zerfaserung der cellulosehaltigen Materialien die Faserrohstoffe zurückzugewinnen.

Die Reaktionen a) bis d) laufen normalerweise sehr glatt ab, jedoch ist eine generelle Angabe von Reaktionszeiten nicht möglich, da diese im starken Maße abhängig sind vom Grade der Naßverfestigung und beispielsweise vom Flächengewicht der wiederaufzuschließenden cellulosehaltigen Materialien. Des weiteren ist es möglich, mit Hilfe der zuletzt beschriebenen wasserdispergierbaren Polyisocyanate sei es in Substanz oder in wäßriger Suspension, chemisch oder biologisch abbaubare Beschichtungsmittel, Klebstoffe, Bindemittel oder Kunststoffe herzustellen.

### Beispiele

### a) Herstellung der Isocyanatzubereitungen

### Herstellung eines Oligoketals der Struktur I:

104 g Dimethoxypropan (1 mol) werden mit 106 g Diethylenglykol (1 mol), 300 g Toluol und 0,2 g p-Toluolsulfonsäure zusammen in einem Dreihalskolben mit Rührer und aufgesetzter Destillationsbrücke vorgelegt und langsam aufgeheizt. Das sich bildende Azeotrop aus Methanol und Toluol wird abdestilliert und die Heiztemperatur nach Maßgabe der Destillation erhöht, bis 110°C erreicht sind. Der Rückstand, eine braune Flüssigkeit, wird durch Zugabe von Natriumhydrogencarbonat entsäuert; dadurch ändert sich die Farbe nach rot. Die Lösung wird dann am Rotationsverdampfer vom Lösungsmittel befreit und von dem Rohprodukt die OH-Zahl bestimmt. Diese beträgt 360 mg KOH/g.

### Herstellung eines Reaktionsproduktes aus dem Oligoketal der Struktur I mit einem Polyisocyanat der Struktur II:

100 g (n OH = 0,643 mol) des Oligoketals der Struktur I (Rohprodukt) werden mit 422,3 g (n NCO = 1,28 mol) 3,5-Bis[6-isocyanatohexyl]-2,4,6-trisoxo-tetrahydro-1,3,5-oxadiazin (gemäß DE 29 09 906) unter Zugabe von 1,0 g Triethylamin bei Raumtemperatur umgesetzt. Nach Abklingen der sofort einsetzenden Kohlendioxidentwicklung wird die Temperatur auf 50°C erhöht. Zuerst wird eine Stunde gerührt, dann Vakuum angelegt und das Produkt sowohl entgast als auch vom Triethylamin befreit. Das fertige Produkt hat einen Isocyanatgehalt von 12,5 %.

Hydrophilierung des Umsetzungsproduktes aus dem Oligoketal I und dem Polyisocyanat der Struktur II mit einem monofunktionellen Ether der Struktur III und einer Verbindung der Struktur IV:

Als monofunktioneller Ether der Struktur III wird ein Methoxypolyethylenglykol mit einem mittleren Molekulargewicht von 500, als Verbindung der Struktur IV ein auf Morpholinoethanol gestarteter Polyether auf Basis von Ethylenoxid mit einem Zahlenmittel des Molgewichtes von 428 g/mol und einer OH-Zahl von 131 mg KOH/g. Dieser Polyether wird mit Toluolsulfonsäuremethylester umgesetzt im stöchiometrischem Verhältnis 1:1. Seine OH-Zahl beträgt dann 89 mg KOH/g.

Es wurden unterschiedliche Grade der Hydrophilierung und Kationisierung realisiert; die hergestellten Präparate werden als die Isocyanatzubereitungen 1 bis 3 bezeichnet. Ihre Zusammensetzung ist aus der folgenden Tabelle zu entnehmen.

**Tabelle 1:**

| Isocyanatzubereitung | 1 | 2 | 3 |
|---|---|---|---|
| Menge Reaktionsprodukt aus I und II [g] | 73,6 | 72,2 | 70,8 |
| Menge monof. Polyether III [g] | 20,0 | 15,0 | 10,0 |
| Menge Verb. IV [g] | 6,4 | 12,8 | 19,2 |
| Menge Dibutylphosphorsäure [g] | 0,05 | 0,05 | 0,05 |
| NCO Gehalt [%] | 6,8 | 6,8 | 6,6 |

Die Isocyanatzubereitungen 1 bis 3 sind in Wasser gut dispergierbar.

### Vergleichsprodukt 1

Eine Isocyanatzubereitung bestehend aus:
a) 22,6 Gew.-Teilen eines aus der Trimerisierung von Hexamethylendiisocyanat gewonnenen. Isocyanatgruppen aufweisenden, im wesentlichen aus Tri(6-isocyanatohexyl)isocyanurat und dessen höheren Homologen bestehenden Isocyanatgemisch mit einem NCO-Gehalt von 21,4 % und einer Viskosität von 3000 mPas (23°C).
b) 52,9 Gew.-Teilen eines Prepolymeren aus Ricinusöl und Hexamethylendiisocyanat mit einem NCO-Gehalt von 7,9 % und einer Viskosität von 4533 mPas.
c) 18,1 Gew.-Teilen eines auf 2-(2-Methoxy)ethoxyethanol gestarteten Polyethers auf Basis von Ethylenoxid mit dem Zahlenmittel des Molekulargewichts von 350 g/mol und einer OHZ von 160 mg KOH/g.
d) 6,4 Gew.-Teilen des auf Seite 16, Zeile 1 beschriebenen Polyethers.

### Vergleichsprodukt 2

Dieses Produkt wird beschrieben in EP-A 0 582 166 in Beispiel No. 24.

### b) Herstellung von Papier und Prüfung der Naßfestigkeit

Eine Mischung aus 80 % gebleichtem Kiefernsulfat-Zellstoff und 20 % gebleichtem Birkensulfatzellstoff wird bei einer Stoffdichte von 2,5 % im Holländer auf einen Mahlgrad von 38° SR gemahlen. Sodann werden jeweils 100 g der erhaltenen Zellstoffsuspension in Bechergläsern mit Wasser auf 1000 ml Volumen verdünnt.

0,5 Gew.-% und 1,0 Gew.-%, bezogen auf den Zellstoff, sowohl von den Vergleichssubstanzen als auch von den hergestellten wasserdispergierbaren Isocyanaten. werden nach vorheriger Dispergierung in Wasser (Dispersion mit 20 Gew.-% Isocyanatzubereitung) zu den Zellstoff-Dispersionen gegeben und diese Dispersionen nach Zugabe noch 3 Minuten gerührt.

Danach werden mit den Inhalten der Bechergläser auf einem Blattbildner (Bauart Rapid-Köthen) Papierblätter mit einem Flächengewicht von ca. 80 g/m² gebildet. Die Papierblätter werden bei 85°C für 8 Minuten im Vakuum bei 20 mm Hg getrocknet und noch 10 Minuten bei 110°C nacherhitzt. Aus jedem Papierblatt werden nach Klimafixierung 5 Prüfstreifen von 1,5 cm Breite ausgeschnitten und 5 Minuten in destilliertes Wasser eingetaucht. Sodann werden die nassen Streifen auf einer Zugmaschine sofort auf ihre Nachbruchlast geprüft. Diese Prüfergebnisse sowie die für die Restnaßbruchlast und die Wasseraufnahme sind in der folgenden Tabelle zusammengefaßt.

Die Ergebnisse bei der Naßbruchlast und bei der Naßaufnahme sind um so besser, je größer der ermittelte Zahlenwert ist, während die Werte der Naßbruchlast nach NaOH-Behandlung um so besser sind, je kleiner der gefundene Zahlenwert der Restnaßbruchlast ist. Die so ermittelten Werte für die Restnaßbruchlast sind eine Maßzahl für die Wiederaufschließbarkeit des naßfest ausgerüsteten Papiers.

**Tabelle 2:**

| Isocyanatzubereitung: | 1 | 2 | 3 | | |
|---|---|---|---|---|---|
| Vergleichsprodukt: | | | | 2 | 1 |

| Naßbruchlast [N]: | | | | | |
|---|---|---|---|---|---|
| bei 0,5 % Einsatz: | 25,3 | 27,2 | 26,8 | 8,2 | 26,4 |
| bei 1,0 % Einsatz: | 29,4 | 31,1 | 30,3 | 15,1 | 29,7 |

| Rest-NBL [%] n. 5h 4 % NaOH/50°C: | | | | | |
|---|---|---|---|---|---|
| bei 0,5 % Einsatz: | 47,0 | 47,8 | 54,5 | 80,5 | 48,5 |
| bei 1,0 % Einsatz: | 60,2 | 56,9 | 66,0 | 83,4 | 63,9 |

| Naßaufnahme [%]: | | | | | |
|---|---|---|---|---|---|
| bei 0,5 % Einsatz: | 71,5 | 64,6 | 57,0 | 63,5 | 18,0 |
| bei 1,0 % Einsatz: | 60,6 | 58,1 | 61,2 | 58,8 | 16,1 |

Den gefundenen Meßwerten ist zu entnehmen, daß die erfindungsgemäßen Isocyanatzubereitungen eine Verbesserung bei den erreichbaren Naßbruchlasten, den Restnaßbruchlasten und der Naßaufnahme bewirken.

## Patentansprüche

1. Wasserdispergierbare Polyisocyanate, erhältlich durch Umsetzung von:
a) mindestens einer bishydroxylfunktionellen Verbindung der Struktur (I):
HO-R₁-[O-CR₂R₃-O-R₁]ₙ-OH (I),
worin
R₁ für einen Alkylenrest mit zwei bis zehn Kohlenstoffatomen oder für einen Rest -R-[O-R]ₚ- steht, wobei R für einen Alkylenrest mit zwei bis zehn Kohlenstoffatomen und p für eine ganze Zahl von 0 bis 12 steht,
R₂ und R₃ unabhängig voneinander für C₁- bis C₁₀-Alkyl oder Wasserstoff, mit der Maßgabe, daß sofern einer der Reste R₂ oder R₃ Wasserstoff bedeuten soll, der andere C₁- bis C₁₀-Alkyl bedeuten, und
n für eine ganze Zahl von 1 bis 45 steht,
mit
b) wenigstens einem Polyisocyanat der Struktur (II)
Q[NCO]_{q} (II),
worin
q für eine Zahl größer oder gleich 2 steht und
Q für einen aliphatischen Kohlenwasserstoffrest mit 2 bis 18 C-Atomen, einen cycloaliphatischen Kohlenwasserstoffrest mit 4 bis 15 C-Atomen, einen aromatischen Kohlenwasserstoffrest mit 6 bis 15 C-Atomen oder einen araliphatischen Kohlenwasserstoffrest mit 8 bis 15 C-Atomen steht, wobei die genannten aliphatischen, cycloaliphatischen, aromatischen und araliphatischen Kohlenwasserstoffreste jeweils gegebenenfalls ein oder mehrere Heteroatome aus der Reihe O, N, S enthalten,
und anschließender Umsetzung in beliebiger Reihenfolge mit
c) mindestens einem monofunktionellen Polyetheralkohol der Struktur (III)
R₄-[O-R₅]ₘ-O-H (III),
worin
R₄ für C₁-C₄-Alkyl steht,
R₅ für -CHX-CHY- steht, wobei X und Y für Methyl, Ethyl oder Wasserstoff stehen mit der Maßgabe, daß sofern einer der Substituenten X und Y Methyl oder Ethyl bedeutet, der andere stets Wasserstoff bedeuten soll,
m für eine ganze Zahl zwischen 3 und 50 steht,
sowie gegebenenfalls
d) mit einer Verbindung der Struktur (IV)
H-O-[R₅-O]ₒ-N⁺R₆R₇R₈ X⁻ (IV),
worin
R⁵ die oben für Formel (III) angegebene Bedeutung hat,
R⁶ und R⁷ unabhängig voneinander für C₂-C₇-Alkyl stehen,
oder
R⁶ und R⁷ gemeinsam mit dem N-Atom an welches sie gebunden sind für einen 5- oder 6-gliedrigen heterocyclischen Ring stehen,
R⁸ für C₁-C₇-Alkyl steht,
o für eine ganze Zahl von 2 bis 60 steht, und
X⁻ für ein Anion steht.

2. Polyisocyanate gemäß Anspruch 1, **dadurch gekennzeichnet, daß** als Polyisocyanate (II) aliphatische, cycloaliphatische, araliphatische oder aromatische Isocyanate mit einer NCO-Funktionalität von 1,8 bis 4,2 eingesetzt werden.

3. Polyisocyanate gemäß Ansprüchen 1 und 2, **dadurch gekennzeichnet, daß** als Polyisocyanate (II) solche mit Isocyanurat- und/oder Allophanat- und/oder Biuret- und/oder Oxadiazinstrukturen eingesetzt werden.

4. Polyisocyanate gemäß Ansprüchen 1 bis 3, **dadurch gekennzeichnet, daß** als Polyetheralkohole (III) solche eingesetzt werden, die im statistischen Mittel 3 bis 50 Polyalkylenoxideinheiten pro Molekül aufweisen.

5. Verfahren zur Herstellung von wasserdispergierbaren Polyisocyanaten gemäß Anspruch 1, **dadurch gekennzeichnet, daß**
a) mindestens einer bishydroxylfunktionellen Verbindung der in Anspruch 1 angegebenen Struktur (I) mit
b) mindestens einem Polyisocyanat der in Anspruch 1 angegebenen Struktur (II)
und anschließend in beliebiger Reihenfolge mit
c) mindestens einem Polyetheralkohol der in Anspruch 1 angegebenen Struktur (III)
und gegebenenfalls mit
d) mindestens einem quaternierten tertiären Aminopolyetheralkohol der in Anspruch 1 angegebenen Struktur (IV)
umgesetzt wird.

6. Wäßrige Polyisocyanat-Dispersion enthaltend wenigstens ein wasserdispergierbares Polyisocyanat gemäß Ansprüchen 1 bis 4.

7. Wäßrige Polyisocyanat-Dispersion gemäß Anspruch 6, **dadurch gekennzeichnet, daß** sie eine Konzentration von 0,05 bis 70 % aufweist

8. Verwendung der wäßrigen Polyisocyanat-Dispersion gemäß Ansprüchen 6 und 7 zur Veredelung von cellulosehaltigen Materialien.

9. Verwendung der wäßrigen Polyisocyanat-Dispersion gemäß Ansprüchen 6 und 7 zur Trocken- und Naßfestausrüstung von Papier, Pappe und Karton.

## Claims

1. Water-dispersible polyisocyanates, obtainable by reaction of:
a) at least one bishydroxy-functional compound of the structure (I):
HO-R₁-[O-CR₂R₃-O-R₁]ₙ-OH (I)
in which
R₁ represents an alkylene radical having two to ten carbon atoms or represents a radical -R-[O-R]ₚ-, R representing an alkylene radical having two to ten carbon atoms and p representing an integer from 0 to 12,
R₂ and R₃, independently of one another, represent C₁- to C₁₀-alkyl or hydrogen, with the proviso that, if one of the radicals R₂ or R₃ denotes hydrogen, the other radical denotes C₁- to C₁₀-alkyl, and
n represents an integer from 1 to 45,
with
b) at least one polyisocyanate of the structure (II)
Q[NCO]_{q} (II)
in which
q represents a number greater than or equal to 2 and
Q represents an aliphatic hydrocarbon radical having 2 to 18 C atoms, a cycloaliphatic hydrocarbon radical having 4 to 15 C atoms, an aromatic hydrocarbon radical having 6 to 15 C atoms or an araliphatic hydrocarbon radical having 8 to 15 C atoms, said aliphatic, cycloaliphatic, aromatic and araliphatic hydrocarbon radicals each optionally containing one or more heteroatoms from the series O, N, S,
and subsequent reaction, in any order, with
c) at least one monofunctional polyether alcohol of the structure (III)
R₄-[O-R₅]ₘ-O-H (III)
in which
R₄ represents C₁-C₄-alkyl.
R₅ represents -CHX-CHY-, X and Y representing methyl, ethyl or hydrogen, with the proviso that, if one of the substituents X and Y denotes methyl or ethyl, the other always denotes hydrogen,
m represents an integer between 3 and 50.
and optionally
d) with a compound of the structure (IV)
H-O-[R₅-O]ₒ-N⁺R₆R₇R₈ X⁻ (IV)
in which
R⁵ has the meaning stated above for formula (III),
R⁶ and R⁷, independently of one another, represent C₂-C₇-alkyl
or
R⁶ and R⁷, together with the N atom to which they are bonded, represent a 5- or 6-membered heterocyclic ring,
R⁸ represents C₁-C₇-alkyl,
o represents an integer from 2 to 60 and
X⁻ represents an anion.

2. Polyisocyanates according to Claim 1, **characterized in that** the polyisocyanates (II) used are aliphatic, cycloaliphatic, araliphatic or aromatic isocyanates having an NCO functionality of 1.8 to 4.2.

3. Polyisocyanates according to Claims 1 and 2, **characterized in that** the polyisocyanates (II) used are those having isocyanurate and/or allophanate and/or biuret and/or oxadiazine structures.

4. Polyisocyanates according to Claims 1 to 3, **characterized in that** the polyether alcohols (III) used are those which on statistical average have 3 to 50 polyalkylene oxide units per molecule.

5. Process for the preparation of water-dispersible polyisocyanates according to Claim 1, **characterized in that**
a) at least one bishydroxy-functional compound of the structure (I) stated in Claim 1 is reacted with
b) at least one polyisocyanate of the structure (II) stated in Claim 1 and then, in any desired order, with
c) at least one polyether alcohol of the structure (III) stated in Claim 1 and optionally with
d) at least one quaternized tertiary aminopolyether alcohol of the structure (IV) stated in Claim 1.

6. Aqueous polyisocyanate dispersion containing at least one water-dispersible polyisocyanate according to Claims 1 to 4.

7. Aqueous polyisocyanate dispersion according to Claim 6, **characterized in that** it has a concentration of 0.05 to 70%.

8. Use of the aqueous polyisocyanate dispersion according to Claims 6 and 7 for the treatment of cellulose-containing materials.

9. Use of the aqueous polyisocyanate dispersion according to Claims 6 and 7 for the treatment of paper, board and cardboard to impart dry and wet strength.

## Revendications

1. Polyisocyanates dispersables à l'eau, obtenus par réaction de :
a) au moins un composé bis-hydroxylé de structure (I) :
HO-R₁-[O-CR₂R₃-O-R₁]ₙ-OH (I),
dans laquelle
R₁ représente un groupe alkylène en C₂-C₁₀ ou un groupe -R-[O-R]ₚ- dans lequel R représente un groupe alkylène en C₂-C₁₀ et p est un nombre entier allant de 0 à 12,
R₂ et R₃ représentent chacun, indépendamment l'un de l'autre, un groupe alkyle en C₁-C₁₀ ou l'hydrogène, sous réserve que lorsque l'un des symboles R₂ ou R₃ représente l'hydrogène, l'autre représente un groupe alkyle en C₁-C₁₀, et
n est un nombre entier allant de 1 à 45,
avec
b) au moins un polyisocyanate de structure (II)
Q[NCO]_{q} (II),
dans laquelle
q est un nombre entier supérieur ou égal à 2 et
Q représente un radical hydrocarboné aliphatique en C₂-C₁₈, un radical hydrocarboné cycloaliphatique en C₄-C₁₅, un radical hydrocarboné aromatique en C₆-C₁₅, ou un radical hydrocarboné araliphatique en C₈-C₁₅, ces radicaux aliphatiques, cycloaliphatiques, aromatiques et araliphatiques pouvant contenir chacun le cas échéant un ou plusieurs hétéroatomes choisis parmi O, N et S,
et réaction consécutive, dans un ordre quelconque, avec
c) au moins un polyéther-alcool monofonctionnel de structure (III)
R₄-[O-R₅]ₘ-O-H (III)
dans laquelle
R₄ représente un groupe alkyle en C₁-C₄,
R5 représente un groupe -CHX-CHY- dans lequel X et Y représentent des groupes méthyle, éthyle ou l'hydrogène, sous réserve que lorsque l'un des symboles X et Y représente un groupe méthyle ou éthyle, l'autre doit toujours représenter l'hydrogène,
m est un nombre entier allant de 3 à 50,
et le cas échéant
d) avec un composé de structure (IV)
H-O-[R₅-O]ₒ-N⁺R₆R₇R₈ X⁻ (IV),
dans laquelle
R₅ a les significations indiquées en référence à la formule (III),
R₆ et R₇ représentent chacun, indépendamment l'un de l'autre, un groupe alkyle en C₂-C₇,
ou bien
R₆ et R₇ représentent ensemble et avec l'atome d'azote auquel ils sont reliés un hétérocycle à 5 ou 6 chaînons,
R₈ représente un groupe alkyle en C₁-C₇,
o est un nombre entier allant de 2 à 60, et
X⁻ représente un anion.

2. Polyisocyanates selon la revendication 1, **caractérisés en ce que** l'on utilise en tant que polyisocyanates (II), des isocyanates aliphatiques, cycloaliphatiques, araliphatiques ou aromatiques à une fonctionnalité en NCO de 1,8 à 4,2.

3. Polyisocyanates selon les revendications 1 et 2, **caractérisés en ce que** l'on utilise en tant que polyisocyanates (II), des polyisocyanates à structures d'isocyanurates et/ou d'allophanates et/ou de biurets et/ou d'oxadiazines.

4. Polyisocyanates selon les revendications 1 à 3, **caractérisés en ce que** l'on utilise en tant que polyéther-alcools (III), des composés qui contiennent en moyenne statistique de 3 à 50 motifs oxyde de polyalkylène par molécule.

5. Procédé pour la préparation des polyisocyanates dispersables à l'eau selon la revendication 1, **caractérisé en ce que** l'on fait réagir
a) au moins un composé bis-hydroxylé de structure (I) de la revendication 1 avec
b) au moins un polyisocyanate de structure (II) de la revendication 1, puis, dans un ordre quelconque, avec
c) au moins un polyéther-alcool de structure (III) de la revendication 1 et le cas échéant avec
d) au moins un tert-aminopolyétheralcool quaternisé de structure (IV) de la revendication 1.

6. Dispersion aqueuse de polyisocyanate contenant au moins un polyisocyanate dispersable à l'eau selon les revendications 1 à 4.

7. Dispersion aqueuse de polyisocyanate selon la revendication 6, **caractérisée en ce qu'**elle a une concentration de 0,05 à 70 %.

8. Utilisation de la dispersion aqueuse de polyisocyanate selon les revendications 6 et 7 pour l'ennoblissement de matières cellulosiques.

9. Utilisation de la dispersion aqueuse de polyisocyanate selon les revendications 6 et 7 pour conférer la résistance mécanique à sec et au mouillé à des papiers et cartons.
